(19) Europäisches Patentamt
European Patent Office
Office européen des brevets

(11) **EP 2 782 984 B1**

(12) **FASCICULE DE BREVET EUROPEEN**

(45) Date de publication et mention
de la délivrance du brevet:
**08.05.2019 Bulletin 2019/19**

(21) Numéro de dépôt: **12790531.3**

(22) Date de dépôt: **20.11.2012**

(51) Int Cl.:
*C10K 3/04* *(2006.01)*     *C01B 3/58* *(2006.01)*
*C07C 1/04* *(2006.01)*     *C07C 9/04* *(2006.01)*
*C10J 3/84* *(2006.01)*     *C10L 3/08* *(2006.01)*
*C01B 3/56* *(2006.01)*     *C10J 3/46* *(2006.01)*
*C10J 3/48* *(2006.01)*     *C10K 1/04* *(2006.01)*

(86) Numéro de dépôt international:
**PCT/EP2012/073034**

(87) Numéro de publication internationale:
**WO 2013/076051 (30.05.2013 Gazette 2013/22)**

(54) **PROCEDE DE PRODUCTION DE BIOMETHANE**

HERSTELLUNGSVERFAHREN FÜR BIOMETHAN

BIOMETHANE PRODUCTION METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.11.2011 FR 1160576**

(43) Date de publication de la demande:
**01.10.2014 Bulletin 2014/40**

(73) Titulaire: **ENGIE
92400 Courbevoie (FR)**

(72) Inventeurs:
• **MARCHAND, Bernard
F-75018 Paris (FR)**

• **KARA, Yilmaz
F-95600 Eaubonne (FR)**

(74) Mandataire: **Cornuejols, Georges et al
Cassiopi
230 Avenue de l'Aube Rouge
34170 Castelnau-le-Lez (FR)**

(56) Documents cités:
**WO-A1-2011/060539     US-A1- 2009 259 080**

• **GALLAGHER J E ET AL: "Catalytic coal
gasification for SNG manufacture",
INTERNATIONAL JOURNAL OF ENERGY
RESEARCH, WILEY, CHICHESTER, GB, vol. 4, no.
2, 1 avril 1980 (1980-04-01), pages 137-147,
XP002554523, ISSN: 0363-907X, DOI:
10.1002/ER.4440040206 [extrait le 2007-03-14]**

**Description**

La présente invention concerne le domaine de la production de biométhane, et plus particulièrement un procédé de production de biométhane par gazéification d'une charge hydrocarbonée.

Actuellement, la production de Biométhane (ou SNG pour Substitute Natural Gas selon la terminologie anglaise) peut être réalisée par conversion thermochimique de la biomasse.

La biomasse peut être constituée par les résidus de bois (copeaux, brin de scie, écorces), les résidus de plantes (pelures, graines, tiges, céréales, blés..), les résidus du secteur agricole, les déchets agroalimentaires (graisses, résidus d'abattoirs), les déchets animaux (fumier), les déchets reliés à l'activité humaine (vidanges), les algues marines ...

Cette conversion est réalisée par un procédé constitué de trois étapes principales:

- la gazéification de la biomasse pour produire du gaz de synthèse (syngas) composé essentiellement d'hydrogène ($H_2$), de monoxyde de carbone (CO), de dioxyde de carbone ($CO_2$) et de méthane ($CH_4$),
- la méthanation catalytique qui consiste à convertir l'hydrogène et le monoxyde de carbone en méthane et,
- la mise aux spécifications qui vise à éliminer l'hydrogène résiduel, le monoxyde de carbone résiduel, l'eau et le dioxyde de carbone afin de produire du biométhane conforme aux spécifications d'injection sur le réseau de gaz naturel, en particulier en termes de pouvoir calorifique (PCS) et d'indice de Wobbe.

La gazéification de la biomasse est réalisée au sein d'un réacteur dans lequel la biomasse subit différentes étapes réactionnelles.

La biomasse est soumise, dans un premier temps, à une dégradation thermique par un séchage puis une dévolatilisation de la matière organique pour produire un résidu carboné (le char), un gaz de synthèse ($H_2$, CO, $CO_2$, $CH_4$, ...), et des composés condensables contenus dans le syngas (tars et plus généralement, tout ce qui est condensable). Le résidu carboné peut ensuite être oxydé par l'agent de gazéification (vapeur d'eau, air, oxygène) pour produire de l'hydrogène, du monoxyde de carbone etc.... En fonction de sa nature, cet agent de gazéification peut également réagir avec les tars ou les gaz majoritaires. Ainsi, s'il s'agit de vapeur d'eau ($H_2O$), une réaction de gaz à l'eau (ou WGS pour Water Gas Shift selon la terminologie anglaise) se produit dans le réacteur de gazéification selon l'équilibre suivant :

$$CO + H_2O \Leftrightarrow H_2 + CO_2$$

La pression du réacteur a peu d'effet sur cette réaction. Par contre, l'équilibre est fortement lié à la température du réacteur et aux teneurs initiales des réactifs.

Pour les procédés existants, le ratio $H_2$/CO ne dépasse jamais deux à l'issue de l'étape de gazéification et par exemple, il est de l'ordre de 1,8 pour le concept à double lits fluidisés dit FICFB (pour Fast Internally Circulating Fluidised Bed selon la terminologie anglaise). Ce ratio $H_2$/CO est un facteur important pour la production de biométhane car la réaction de méthanation qui permet la production du méthane et sur laquelle repose le procédé de production de biométhane est la suivante :

$$CO + 3H_2 \Leftrightarrow CH_4 + H_2O$$

Pour maximiser la production de méthane $CH_4$, et minimiser l'excès de monoxyde de carbone, il convient que l'hydrogène et le monoxyde de carbone soient dans un rapport stoechiométrique de 3 :1. Cependant, même en respectant ce ratio, la réaction reste incomplète du fait de l'équilibre chimique. Le ratio 3 :1 maximisant la réaction est obtenu en réalisant une réaction de WGS complémentaire. Celle-ci peut être réalisée préalablement à la méthanation dans un réacteur dédié, en présence de catalyseurs spécifiques. Elle peut éventuellement être réalisée directement dans le même réacteur que la méthanation avec adaptation éventuelle du catalyseur. Dans les deux cas, cette réaction nécessite une injection significative de vapeur d'eau.

En sortie du gazéifieur, la fraction massique d'eau dans le gaz de synthèse est généralement de l'ordre de 30 %. Elle provient pour partie de l'humidité de la biomasse et, dans le cas de certains procédés, pour partie d'une injection directe de vapeur dans le gazéifieur. Cependant, l'étape de purification du syngas destinée à éliminer les polluants avant la méthanation (en particulier, élimination des goudrons, poussières, composés inorganiques, ...) nécessite un refroidissement au cours duquel l'eau présente est en grande partie condensée et éliminée, et n'est ainsi plus disponible pour une étape de WGS supplémentaire.

En effet, à la suite de ces étapes d'épuration, la fraction massique d'eau est ramenée à environ 5 %, ce qui est une teneur insuffisant pour réaliser la réaction de WGS complémentaire et obtenir un fonctionnement optimal de la chaîne de procédés dans sa configuration classique. Ainsi, pour permettre l'ajustement du ratio $H_2$/CO aux conditions requises pour la réaction de méthanation, l'injection de vapeur d'eau devient indispensable pour éviter l'excès de monoxyde de carbone avant l'étape de mise aux spécifications. Cette vapeur d'eau est généralement produite par récupération d'énergie haute température sur le procédé : énergie facilement commercialisable et qui constitue in-fine une perte de rentabilité directe du système. Par ailleurs, la mise en oeuvre du WGS se traduit par une complexification du procédé et une augmentation des coûts d'investissement et d'exploitation. Certains procédés connus appartenant à la famille des systèmes de gazéification à réacteur fluidisé double lit (FICFB) proposent des solutions à ces problèmes. Dans ces procédés la gazéification de la biomasse est mise en oeuvre dans un premier réacteur par contact avec un média caloporteur chaud. Ce média et une partie du char de pyrolyse formé dans ce réacteur sont extraits en continu à la base du lit. Ils sont ensuite envoyés dans un second réacteur (combusteur) où un media de fluidisation est chauffé par la combustion du char et d'un appoint de combustible avant d'être réinjecté dans le gazéifieur. Le média caloporteur peut être constitué d'un solide inerte (du sable par exemple) ou d'un minéral (olivine) ayant des propriétés catalytiques pour le craquage ou le reformage des goudrons issus de la conversion imparfaite de la biomasse. Dans ce cas, le ratio $H_2/CO$ atteint est compris entre 1,3 et 1,8.

La demande internationale WO 01/23302 décrit un procédé appartenant cette famille des procédés FICFB, le procédé de reformage amélioré par adsorption AER (pour Absorption Enhanced Reforming selon la terminologie anglaise) qui concerne une production de syngas directement utilisable en réacteur de méthanation pour la production de SNG. Le procédé décrit dans cette demande permet d'atteindre les spécifications optimales (ratio $H_2/CO$ supérieur ou égale à trois) requises pour l'étape de méthanation.

Dans ce procédé AER le média de fluidisation n'est plus constitué d'olivine mais de chaux (CaO). Dans le gazéifieur, la chaux absorbe le dioxyde de carbone présent pour former du carbonate de calcium $CaCO_3$ selon la réaction ci-dessous pour une température comprise entre 650 et 750°C.

$$CaO\ (s) + CO_2\ (g) \rightarrow CaCO_3\ (s)$$

Du fait de la capture du dioxyde de carbone, la réaction de WGS, qui est équilibrée, est déplacée vers la production d'hydrogène et la réduction du monoxyde de carbone ce qui conduit à une augmentation du ratio $H_2/CO$. Le carbonate de calcium est ensuite transformé en chaux par la réaction inverse à plus haute température dans le combusteur. Des ratios $H_2/CO$ de cinq à sept peuvent ainsi être obtenus. Des ratios aussi importants, s'ils permettent de minimiser les risques de cokage sur le catalyseur de méthanation, peuvent entraîner une baisse du rendement global de production de biométhane et des difficultés de séparation de l'hydrogène et du syngas pour une mise aux spécifications du gaz naturel. L'utilisation de chaux conduit également à une légère diminution des teneurs en méthane dans le syngas. Par ailleurs, si la chaux constitue un bon média de fluidisation, sa fragilité mécanique la rend très sujette aux phénomènes d'attrition et limite sa durée de vie.

Il est également connu par la demande de brevet US2010/0286292 un procédé catalytique, généralement en réacteurs à lit fixe, qui propose d'intégrer un réacteur de WGS à la chaîne de conversion afin d'ajuster le ratio $H_2/CO$ proche de la stoechiométrie de la méthanation. Un inconvénient de ce procédé est qu'il est nécessaire d'injecter une quantité significative de vapeur d'eau pour, d'une part, assurer la réaction de WGS supplémentaire et, d'autre part, limiter le dépôt de coke sur les catalyseurs.

Un autre procédé décrit dans les documents EP1568674 et WO2009/007061 concerne la production de SNG à partir de la gazéification de biomasse. Ce procédé est constitué d'une épuration des composés tels que le sulfure d'hydrogène ($H_2S$) ou le sulfure de carbonyle (COS) par adsorption physique ou chimique au sein de lits fixes de charbon actif (CA), d'oxydes métalliques (par exemple oxyde de zinc ZnO) et d'une méthanation en lit fluidisé de particules catalytiques d'une granulométrie comprise entre 20 et 2 000 $\mu m$. Le réacteur peut être alimenté en vapeur d'eau additionnelle de fluidisation et un recyclage d'hydrogène issu de la mise aux spécifications peut avoir lieu. Ce procédé présente également l'inconvénient de nécessiter des étapes de méthanation et/ou séparation supplémentaires qui compliquent le procédé. US 2009/0259080 et WO 2011/060539 divulguent un procédé et un dispositif de production de biométhane.

La présente invention a donc pour objet de pallier un ou plusieurs des inconvénients de l'art antérieur en proposant un procédé visant à augmenter la conversion de la biomasse en biométhane et à améliorer l'efficacité énergétique globale de celle-ci. Le procédé ne nécessitant pas de modifier la conception des réacteurs de gazéification et/ou de méthanation et se dispensant de toute étape supplémentaire, notamment de l'étape de WGS préalablement ou parallèlement à la méthanation.

Pour cela, la présente invention propose, selon un premier aspect, un procédé de production de biométhane selon la revendication 1.

Ce recyclage conduit à une augmentation de la quantité de monoxyde de carbone présent dans le gazéifieur qui favorise ainsi la production d'hydrogène selon les équilibres thermochimiques décrits par la réaction WGS directement au sein de ce même réacteur. L'augmentation de cette quantité d'hydrogène conduit elle-même à augmenter la production de méthane lors de l'étape de méthanation.

Selon un mode de réalisation de l'invention, la charge hydrocarbonée est de la biomasse.

Selon un mode de réalisation de l'invention, le flux recyclé comprend de l'hydrogène résiduel.

Selon un mode de réalisation de l'invention, le flux recyclé comprend du méthane résiduel.

Selon un mode de réalisation de l'invention, en sortie du réacteur de gazéification, le gaz de synthèse est à une température comprise entre 600 et 1 000°C.

Selon un mode de réalisation de l'invention, le procédé comprend une étape d'échange de chaleur après l'étape de gazéification pour refroidir le gaz de synthèse à température ambiante.

Selon un mode de réalisation de l'invention, l'étape d'échange de chaleur est réalisée avant l'étape d'épuration.

Selon un mode de réalisation de l'invention, le procédé comprend une étape de déshydratation réalisée après l'étape d'échange de chaleur.

Selon un mode de réalisation de l'invention, le procédé est réalisé à une pression comprise entre 0,5 et 70 bars.

Selon un mode de réalisation de l'invention, le mélange gazeux obtenu en sortie du réacteur de méthanation est à une température comprise entre 250 et 700°C.

Selon un mode de réalisation de l'invention, le flux obtenu après l'étape de mise aux spécifications est à température ambiante.

La présente invention vise, selon un deuxième aspect, un dispositif de production de biométhane selon la revendication 15.

D'autres buts, caractéristiques et avantages de l'invention seront mieux compris et apparaîtront plus clairement à la lecture de la description faite, ci-après, en se référant aux figures annexées et données à titre d'exemple :

- la figure 1 est une représentation schématique d'un mode de réalisation d'un dispositif selon l'art antérieur,
- la figure 2 est une représentation schématique de la mise en oeuvre d'un mode de réalisation particulier du procédé selon l'invention,
- la figure 3 est une représentation schématique, d'un mode de réalisation particulier du dispositif objet de l'invention et
- la figure 4 est une représentation schématique de la mise en oeuvre d'un mode de réalisation particulier du procédé selon l'invention.

Bien que décrit à partir de l'exemple de la biomasse, le procédé selon l'invention peut s'appliquer à tous les produits susceptibles d'être gazéifiés : biomasse, charbon, coke, déchets.....et de façon plus générale à toutes les charges hydrocarbonées.

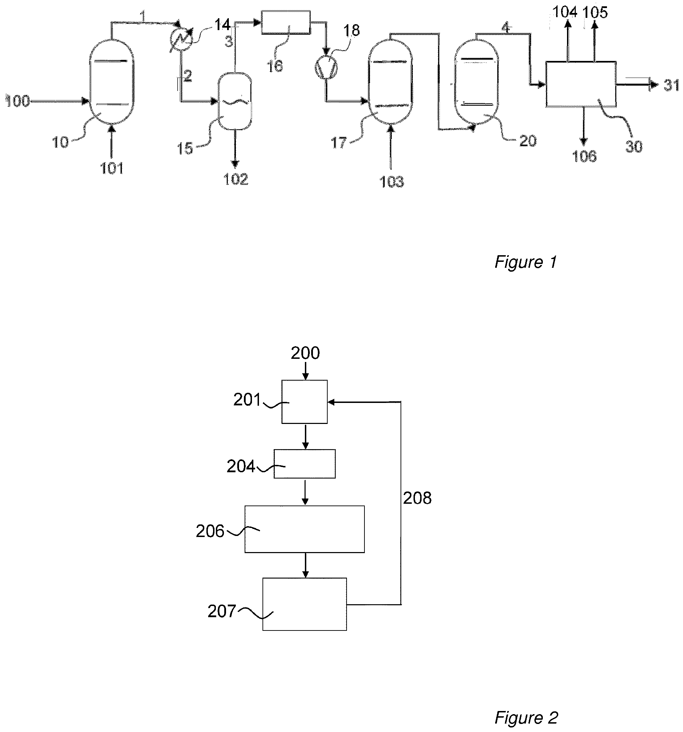

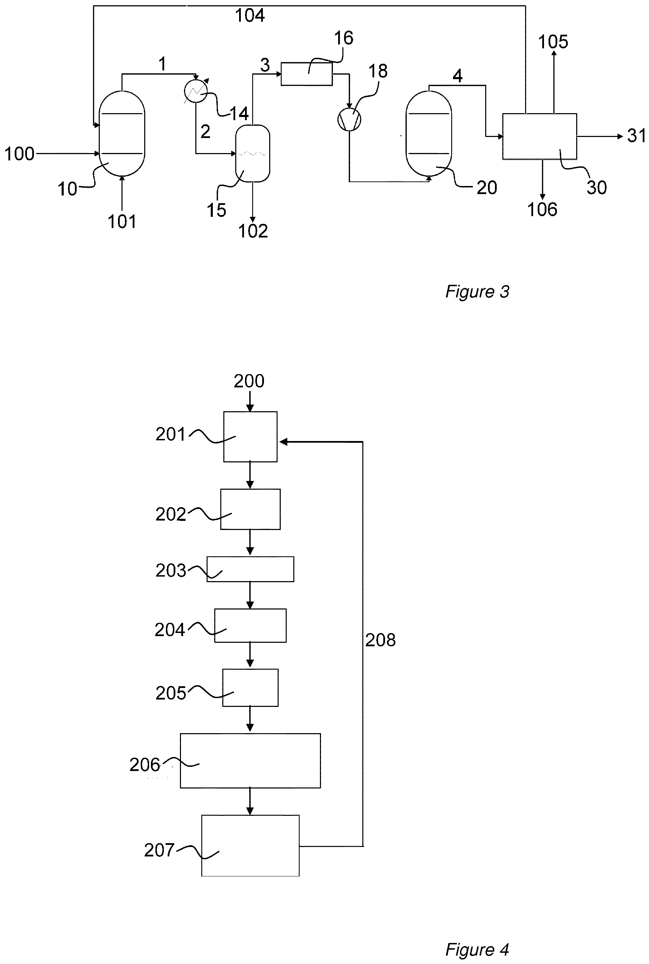

Le mode de réalisation particulier du procédé visé par la présente invention, illustré sur la figure 2 et mis en oeuvre dans le dispositif illustré sur la figure 3, requiert au moins les étapes suivantes, identiques à celles décrites dans l'état de l'art antérieur :

- gazéification (201) : conversion de la charge hydrocarbonée, et par exemple la biomasse, en gaz de synthèse (syngas) ;
- épuration (204) du gaz de synthèse produit lors de l'étape de gazéification de la charge hydrocarbonée pour éliminer les composants polluants néfastes à la durée de vie du catalyseur ;
- méthanation (206) par conversion catalytique du syngas en biométhane ;
- mise aux spécifications (207) du mélange gazeux obtenu lors de l'étape de méthanation du gaz de synthèse pour séparer le biométhane des autres constituants et notamment l'hydrogène, le monoxyde de carbone résiduel, l'eau et le dioxyde de carbone, et ainsi ajuster la composition du biométhane aux spécifications.

La biomasse, se trouvant à température ambiante, et plus précisément à une température égale à 20°C, circulant dans un conduit d'alimentation en biomasse (100), alimente un réacteur de gazéification (10). La biomasse subit, dans ce réacteur de gazéification (10), une conversion thermochimique pour former durant l'étape de séchage/pyrolyse et gazéification un syngas contenant de l'hydrogène, du monoxyde de carbone, du dioxyde de carbone, de l'eau, des tars et goudrons et/ou des composés de formule générale $C_xH_y$, .... Ce syngas circule dans le conduit de circulation du syngas (1).

Avant sa sortie du réacteur, la composition de ce gaz évolue sous l'action de la vapeur d'eau (injectée à une température comprise entre 160 et 500°C, et de préférence égale à 400°C) ou d'agent oxydant (oxygène, Air, ...). Cette évolution de composition se fait, d'une part, avec les équilibres thermochimiques en phase homogène et, d'autre part, du fait de la production de composés par gazéification en phase hétérogène d'une partie du char.

En sortie du gazéifieur (10) le syngas est à une température comprise entre 600 et 1000°C , de préférence entre 800 et 900 °C et de manière très préférée égale à 850°C. Le syngas ainsi produit est épuré de ces polluants (tars, COS, $H_2S$, ...) avant d'alimenter un réacteur de méthanation (20) puis d'alimenter, via un conduit d'alimentation (4), une unité (30) permettant l'étape de mise aux spécifications (également appelée séparation des composés). A l'issue de ces étapes, le procédé permet l'obtention de biométhane (31).

Dans ces conditions, le rapport $H_2/CO$ avant méthanation est inférieur au rapport stoechiométrique et la réaction de méthanation ne peut être maximale que pour l'espèce en défaut, en l'occurrence l'hydrogène. En sortie du réacteur de méthanation (20) le biométhane est à une température comprise entre 250 et 700°C, et, de préférence, égale à 300°C. Outre le biométhane produit, le gaz issu du réacteur de méthanation contient donc le monoxyde de carbone en excès qui n'a pas réagi.

Le mélange gazeux produit lors de l'étape de méthanation est séparé en quatre flux :

- un premier flux composé de méthane qui constitue le biométhane proprement dit, destiné à être valorisé,
- un deuxième flux composé de dioxyde de carbone,
- un troisième flux composé de vapeur d'eau et
- un quatrième flux composé au moins de monoxyde de carbone en excès, et éventuellement de l'hydrogène qui n'a pas réagit du fait des équilibres thermochimiques.

Dans des modes de réalisation particuliers du procédé selon l'invention, ce quatrième flux composé au moins de monoxyde de carbone en excès est recyclé (208) dans le réacteur de gazéification.

Après l'étape de mise aux spécifications, les différents flux sont à température ambiante, et de préférence à une température égale à 20°C.

La mise en oeuvre de la réaction de WGS en amont ou parallèlement à la réaction de méthanation, pour assurer un ajustement du ratio $H_2/CO$, n'étant ainsi pas nécessaire, on obtient un gain énergétique et matière équivalent au débit de cette vapeur normalement additionnée.

Selon des modes de réalisation de l'invention, pour remédier à un éventuel dépôt de coke en surface du catalyseur, dû au fonctionnement du réacteur de méthanation dans ces conditions sous-stoechiométriques et pour des teneurs en $H_2O$ limitées, on utilise un traitement spécifique du catalyseur comme par exemple un dopage au Bore ou un support catalytique adéquat notamment en jouant sur son acidité.

Selon des modes de réalisation de l'invention, afin de limiter le dépôt de coke, on effectue un apport limité de vapeur d'eau pour ajuster sa teneur avant méthanation soit directement, soit en ajustant la température du lavage amont.

En ce qui concerne l'étape de mise aux spécifications du biométhane, qui est en général une étape de séparation, on utilise, par exemple les procédés modulés en pression ou PSA (pour Pressure Swing Adsorption selon la terminologie anglaise), les procédés modulés en température ou TSA (pour Temperature Swing Adsorption selon la terminologie anglaise), les procédés de séparations sur membranes, les procédés d'absorption chimiques aux amines, les procédés d'absorption physique avec le triéthylène glycol. Ces différentes technologies peuvent être utilisées seules ou en association entre elles.

Selon des modes de réalisation illustrés sur la figure 4, l'étape de gazéification (201) est suivie par une étape d'échange de chaleur (202) pour refroidir le syngas avant le passage dans l'épurateur (16). De cette façon, le flux de syngas qui se trouve à une température comprise entre 600 et 1000°C, de préférence entre 800 et 900 °C et de manière très préférée égale à 850°C après passage dans un échangeur de chaleur (14) est à une température comprise entre 4 et 80°C, de préférence entre 25 et 35°C, et de manière très préférée est à température ambiante (plus précisément égale à 20°C).

A l'issue de cette étape d'échange de chaleur (202), l'eau est partiellement éliminée du syngas (circulant dans le conduit (2) disposé entre l'échangeur de chaleur (14) et l'unité de déshydratation (15)) qui est refroidi et déshydraté (203) dans une unité de déshydratation (15) de laquelle sont éliminés les condensats. Cette étape de déshydratation par refroidissement et condensation de la vapeur d'eau (203) est suivie d'une étape d'épuration (204) dans une unité d'épuration (16) dans lequel le flux est amené par le conduit (3) disposé entre l'unité de déshydratation (15) et l'unité d'épuration (16) .

Le procédé selon l'invention peut s'appliquer d'une façon générale à l'ensemble des gazéifieurs.

De préférence, le procédé peut s'appliquer aux procédés produisant un gaz sans dilution par l'azote de l'air.

Le procédé n'est spécifique à aucun procédé de méthanation donné et peut s'appliquer à l'ensemble de ces procédés. Dans le cas de procédés de type lit fixe à recyclage, le procédé permet même une diminution du taux de recyclage.

Le procédé selon l'invention est, dans des modes de réalisation, mis en oeuvre à une pression comprise entre 0,5 et 70 bars, et de préférence entre 1 et 5 bars.

L'invention va maintenant être illustrée avec les exemples suivants non limitatifs.

**Exemples** :

Afin de démontrer l'intérêt de l'invention, des simulations comparatives des solutions antérieures et de la présente invention ont été réalisées avec un outil de simulation de procédé CAPE (pour Computer Aided Process Engineering selon la terminologie anglaise).

Les simulations sont réalisées pour une tonne de biomasse sèche à convertir par heure pour obtenir du biométhane.

Dans les exemples suivants les flux correspondent :

- flux 100, à la biomasse,
- flux 101, à la vapeur injectée dans le gazéifieur,
- flux 1, au syngas en sortie du gazéifieur,
- flux 2, au syngas refroidi,
- flux 3, au syngas déshydraté,
- flux 102, aux condensats,
- flux 103, à la vapeur pour la WGS supplémentaire,
- flux 4, au biométhane avant mise aux spécifications,
- flux 104, au $CO/H_2$
- flux 105, au $CO_2$,
- flux 106, à $H_2O$.

**Exemple comparatif selon l'art antérieur:**

Dans cet exemple selon l'art antérieur (illustré sur la figure 1) la biomasse est introduite dans un réacteur de gazéification (10) dans lequel elle subit une conversion thermochimique, puis le gaz de synthèse (ou syngaz) issu du gazéifieur après passage dans un échangeur de chaleur (14) passe dans une unité de déshydratation (15). Cette étape de déshydratation par refroidissement et condensation de la vapeur d'eau est suivie d'une étape d'épuration (204) dans une unité d'épuration (16) et d'une étape de WGS dans un réacteur de WGS (17) avec ajout de vapeur d'eau. Le syngas subit ensuite une étape de compression (205) dans un compresseur (18). Le syngas ainsi produit et épuré de ces polluants alimente un réacteur de méthanation (20) puis subit une étape de séparation dans une unité dédiée de mise aux spécifications (30).

Le tableau 1 récapitule les conditions et résultats de la simulation pour le procédé selon l'art antérieur à différentes étapes du procédé et pour les différents effluents.

*Tableau 1*

| N° du flux | 100 | 101 | 1 | 2 | 3 | 102 | 103 | 4 | 104 | 105 | 106 | 31 |
|---|---|---|---|---|---|---|---|---|---|---|---|---|
| Pression (Bar) | 1 | 1 | 1 | 1 | 1 | 1 | 3 | 3 | 3 | 3 | 3 | 3 |
| Température (°C) | 20 | 400 | 850 | 32 | 32 | 32 | 200 | 320 | 20 | 20 | 20 | 20 |
| Flux de biomasse kg/h) | 1000 | | | | | | | | | | | |
| Flux d'$H_2O$ (kg/h) | 250 | | | | | | | | | | | |
| Flux molaire total (kmol/h) | | 31,73 | 73,89 | 73,89 | 54,05 | 19,85 | 40 | 79,46 | 6,1 | 61,54 | 61,54 | 11,81 |
| $CO_2$ (fraction molaire) | | 0 | 0,162 | 0,162 | 0,222 | 1,70E-05 | 0 | 0,138 | 0 | 1 | 0 | 0 |
| $H_2O$ (fraction molaire) | | 1 | 0,299 | 0,299 | 0,04 1 | 0,999 | 1 | 0,637 | 0 | 0 | 1 | 0 |
| CO (fraction molaire) | | 0 | 0,156 | 0,156 | 0,214 | 3,27E-08 | 0 | 0,067 | 0,868 | 0 | 0 | 0 |
| $CH_4$(fraction molaire) | | 0 | 0,061 | 0,061 | 0,083 | 9,62E-08 | 0 | 0,149 | 0 | 0 | 0 | 1 |
| $H_2$ (fraction molaire) | | 0 | 0,321 | 0,321 | 0,439 | 1,73E-07 | 0 | 0,01 | 0,132 | 0 | 0 | 0 |
| Flux de $CO_2$ (kmol/h) | | 0 | 12,01 | 12,01 | 12,01 | 3,00E-04 | 0 | 10,96 | 0 | 10,96 | | 0 |
| Flux $H_2O$ (kmol/h) | | 31,73 | 22,08 | 22,08 | 2,23 | 19,85 | 40 | 50,57 | 0 | | 50,57 | 0 |
| Flux de CO2 (kmol/h) | | 0 | 11,55 | 11,55 | 11,55 | 6,49E-07 | 0 | 5,29 | 5,29 | 0 | 0 | 0 |
| Flux de $CH_4$ (kmol/h) | | 0 | 4,51 | 4,51 | 4,51 | 1,91E-06 | 0 | 11,81 | 0 | 0 | 0 | 11,81 |
| Flux $H_2$ (kmol/h) | | 0 | 23,75 | 23,75 | 23,75 | 3,44E-06 | 0 | 0,81 | 0,81 | 0 | 0 | 0 |

EP 2 782 984 B1

**Exemple selon des modes de réalisation particulier de l'invention :**

Dans cet exemple selon l'invention (illustré sur la figure 3), la biomasse circulant dans un conduit d'alimentation en biomasse (100) alimente un réacteur de gazéification (10) dans lequel elle subit une conversion thermochimique, puis le gaz de synthèse (ou syngaz) issu du gazéifieur après passage dans un échangeur de chaleur (14) passe dans une unité de déshydratation (15). Cette étape de déshydratation par refroidissement et condensation de la vapeur d'eau (203) est suivie d'une étape d'épuration dans une unité d'épuration (16). Le syngas subit ensuite une étape de compression (205) dans un compresseur (18). Le syngas ainsi produit et épuré de ces polluants alimente un réacteur de méthanation (20) puis subit une étape de séparation dans une unité de mise aux spécifications (30).

Le tableau 2 récapitule les conditions et résultats de la simulation pour des modes de réalisation du procédé selon l'invention à différentes étapes du procédé et pour les différents effluents.

Tableau 2

| N° du flux | 100 | 101 | 1 | 2 | 3 | 102 | 4 | 104 | 105 | 106 | 31 |
|---|---|---|---|---|---|---|---|---|---|---|---|
| Pression (Bar) | 1 | 1 | 1 | 1 | 1 | 1 | 3 | 3 | 3 | 3 | 3 |
| Température (°C) | 20 | 400 | 850 | 32 | 32 | 32 | 320 | 20 | 20 | 20 | 20 |
| Flux de biomasse kg/h | 1000 | | | | | | | | | | |
| Flux d'$H_2O$ (kg/h) | 250 | | | | | | | | | | |
| Flux molaire total (kmol/h) | | 31,73 | 85,52 | 85,52 | 69,2 | 19,85 | 51,55 | 11,63 | 26,58 | 26,58 | 13,33 |
| $CO_2$(fraction molaire) | | 0 | 0,178 | 0,178 | 0,219 | 1,71E-05 | 0,286 | 0 | 1 | 0 | 0 |
| $H_2O$ (fraction molaire) | | 1 | 0,221 | 0,221 | 0,037 | 0,999 | 0,229 | 0 | 0 | 1 | 0 |
| CO (fraction molaire) | | 0 | 0,229 | 0,229 | 0,284 | 3,27E-08 | 0,219 | 0,974 | 0 | 0 | 0 |
| $CH_4$ (fraction molaire) | | 0 | 0,053 | 0,053 | 0,065, | 9,62E-08 | 0,259 | 0 | 0 | 0 | 1 |
| $H_2$ (fraction molaire) | | 0 | 0,319 | 0,319 | 0,394 | 1,73E-07 | 0,006 | 0,026 | 0 | 0 | 0 |
| Flux de $CO_2$ (kmol/h) | | 0 | 15,22 | 15,22 | 15,22 | 3,40E-03 | 14,73 | 0 | 14,73 | 0 | 0 |
| Flux $H_2O$ (kmol/h) | | 31,73 | 18,87 | 18,87 | 2,54 | 19,85 | 11,85 | 0 | 0 | 11,85 | 0 |
| Flux de CO2 (kmol/h) | | 0 | 19,66 | 19,66 | 19,66 | 6,49E-07 | 11,33 | 11,33 | 0 | 0 | 0 |
| Flux de $CH_4$ (kmol/h) | | 0 | 4,51 | 4,51 | 4,51 | 1,91E-06 | 13,33 | 0 | 0 | 0 | 13,33 |
| Flux $H_2$ (kmol/h) | | 0 | 27,27 | 27,27 | 27,27 | 3,44E-06 | 0,31 | 0,31 | 0 | 0 | 0 |

**Analyse des résultats**

Le rendement énergétique du procédé basé sur la production en méthane est défini par la relation suivante :

$$\alpha = \frac{m_{CH_4} * PCI_{CH_4}}{m_{biomasse} * PCI_{biomasse}}$$

dans laquelle :

m représente la masse de méthane. $CH_4$
m représente la masse de biomasse. biomasse
$PCI_{CH_4}$ représente le pouvoir calorifique inférieur du méthane.
$PCI_{biomasse}$ représente le pouvoir calorifique inférieur de la biomasse. biomasse

Les simulations réalisées montrent que ce rendement est augmenté à 61,2% en mettant en oeuvre la solution proposée dans des modes de réalisation de la présente invention alors que les solutions existantes ne permettent d'atteindre que 54,2 % soit un gain de 7 %.

Dans des modes de réalisation, le procédé selon l'invention repose sur la recirculation du flux $CO/H_2$ vers le gazéifieur. Le débit de recirculation qui y est associé est intimement lié à la pression partielle d'eau dans le gazéifieur (eau introduite avec la biomasse et comme agent de gazéification éventuel). Une teneur trop faible dans le gazéifieur a pour conséquence un débit de recirculation très important sans pour autant impacter la quantité de $CH_4$ produite.

Des modes de réalisation du procédé objet de la présente invention permettent ainsi, en comparaison avec les procédés de l'art antérieur, d'obtenir :

- un flux d'hydrogène produit par la gazéification augmenté de 23,75kmol/h à 27,27 kmol/h ;
- un flux de vapeur de shift supprimé (40,00 kmol/h);
- un flux d'eau à éliminer en sortie de méthanation diminué de 50,57kmol/h à 11,85 kmol/h ce qui se traduit par un gain sur l'énergie de refroidissement consommé par le procédé ;
- une mise aux spécifications de la fraction volumique d'hydrogène, une opération complexe et source de perte d'efficacité du procédé, qui n'est plus nécessaire du fait d'un ratio $H_2/CH_4$ en sortie de réacteur de méthanation qui passe de 6,3 % à 2,7 %. Cette amélioration s'explique principalement par l'excès de monoxyde de carbone dans le réacteur de méthanation.
- un flux de biométhane (SNG) en sortie de système qui passe de 11,81 kmol/h à 13,33 kmol/h soit un gain de 12,9 %.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

**Revendications**

1. Procédé de production de biométhane à partir de charge hydrocarbonée, **caractérisé en ce qu'**il comporte, successivement, au moins les étapes suivantes :

   - gazéification (201) de la charge pour produire un gaz de synthèse dans un réacteur de gazéification (10),
   - déshydratation (203) du gaz de synthèse par refroidissement et condensation de vapeur d'eau (203),
   - épuration (204) du gaz de synthèse produit lors de l'étape de gazéification de la charge et déshydraté, dans une unité d'épuration (16),
   - méthanation (206) du gaz de synthèse épuré et déshydraté, dans un réacteur de méthanation (20) et
   - mise aux spécifications (207) du mélange gazeux obtenu lors de l'étape de méthanation du gaz de synthèse pour obtenir du biométhane, un flux composé au moins de monoxyde de carbone en excès étant recyclé (208) vers le réacteur de gazéification (10) lors de cette étape de mise aux spécifications.

2. Procédé selon la revendication 1, dans lequel la charge hydrocarbonée est de la biomasse.

3. Procédé selon l'une des revendications 1 ou 2, qui comporte, de plus, une étape d'échange de chaleur (202) après l'étape de gazéification (201) permettant au gaz de synthèse d'être refroidi entre 4 et 80°C.

4. Procédé selon la revendication 3, dans lequel le gaz de synthèse se trouvant à une température comprise entre 600°C et 1000°C est refroidi après échange de chaleur à une température comprise entre 4°C et 80°C.

5. Procédé selon la revendication 3, dans lequel le gaz de synthèse se trouvant à une température comprise entre 600°C et 1000°C est refroidi après échange de chaleur à une température comprise entre 25 et 35°C.

6. Procédé selon la revendication 4, dans lequel le gaz de synthèse se trouvant à une température comprise entre 600°C et 1000°C est refroidi après échange de chaleur à la température ambiante.

7. Procédé selon une des revendications 1 à 6, dans lequel le flux recyclé comprend de l'hydrogène résiduel.

8. Procédé selon une des revendications 1 à 7, dans lequel le flux recyclé comprend du méthane résiduel.

9. Procédé selon une des revendications 1 à 8, dans lequel, en sortie du réacteur de gazéification (10), le gaz de synthèse est à une température comprise entre 600 et 1000°C.

10. Procédé selon l'une des revendications 1 à 9, dans lequel l'étape de d'échange de chaleur (202) est réalisée avant l'étape d'épuration (204).

11. Procédé selon une des revendications 1 à 10, qui comporte une étape de déshydratation (203) réalisée après l'étape de d'échange de chaleur (202).

12. Procédé selon une des revendications 1 à 11, qui est réalisé à une pression comprise entre 0,5 et 70 bars.

13. Procédé selon une des revendications 1 à 12, dans lequel le mélange gazeux obtenu en sortie du réacteur de méthanation est à une température comprise entre 250 et 700°C.

14. Procédé selon une des revendications 1 à 13, dans lequel le flux obtenu après l'étape de mise aux spécifications est à température ambiante.

15. Dispositif de production de biométhane à partir de charge hydrocarbonée, pour la mise en oeuvre du procédé selon les revendications 1 à 14, **caractérisé en ce qu'**il comporte au moins :

   - un réacteur de gazéification (10) réalisant une gazéification de la charge pour produire un gaz de synthèse dans le réacteur de gazéification,
   - une unité de déshydratation (15) du gaz de synthèse par refroidissement et condensation de vapeur d'eau,
   - une unité d'épuration (16) réalisant une épuration du gaz de synthèse produit par le réacteur de gazéification (10) de la charge et déshydraté,
   - un réacteur de méthanation (20) réalisant une méthanation du gaz de synthèse épuré et déshydraté,
   - un moyen de mise aux spécifications (30) du mélange gazeux obtenu lors de l'étape de méthanation du gaz de synthèse pour obtenir du biométhane, comportant un moyen de recyclage d'un flux composé au moins de monoxyde de carbone en excès dans le réacteur de gazéification.

**Patentansprüche**

1. Erzeugungsverfahren von Biomethan ausgehend von einer mit Kohlenstoff angereicherten Charge, **dadurch gekennzeichnet, dass** es sukzessive wenigstens die folgenden Schritte umfasst:

   - Vergasung (201) der Charge zum Erzeugen eines Synthesegases in einem Vergasungsreaktor (10),
   - Entwässerung (203) des Synthesegases per Abkühlen und Kondensation von Wasserdampf (203),
   - Reinigung (204) des im Vergasungsschritt der Charge erzeugten und entwässerten Gases in einer Kläreinheit (16),
   - Anreicherung mit Methan (206) des gereinigten und entwässerten Synthesegases in einem Methananreicherungsreaktor (20) und

- Anpassung der gashaltigen Mischung, die bei dem Anreichungsschritt mit Methan des Synthesegases erhalten ist, an die Spezifikationen (207), um Biomethan zu erhalten, wobei ein wenigstens aus überschüssigem Kohlenmonoxid zusammengesetzter Strom bei diesem Anpassungsschritt an die Spezifikationen zum Vergasungsreaktor (10) recycelt (208) ist.

2. Verfahren gemäß Anspruch 1, bei dem die mit Kohlenstoff angereicherte Charge Biomasse ist.

3. Verfahren gemäß einem der Verfahren 1 oder 2, das darüber hinaus einen Wärmeaustausch-Schritt (202) nach dem Vergasungsschritt (201) umfasst, der dem Synthesegas erlaubt, zwischen 4 und 80° C abgekühlt zu sein.

4. Verfahren gemäß Anspruch 3, bei dem das Synthesegas, das eine zwischen 600° C und 1000° C inbegriffene Temperatur aufweist, nach dem Wärmeaustausch auf eine zwischen 4° C und 80° C inbegriffene Temperatur abgekühlt ist.

5. Verfahren gemäß Anspruch 3, bei dem das Synthesegas, das eine zwischen 600° C und 1000° C inbegriffene Temperatur aufweist, nach dem Wärmeaustausch auf eine zwischen 25° C und 35° C inbegriffene Temperatur abgekühlt ist.

6. Verfahren gemäß Anspruch 4, bei dem das Synthesegas, das eine zwischen 600° C und 1000° C inbegriffene Temperatur aufweist, nach dem Wärmeaustausch auf die Umgebungstemperatur abgekühlt ist.

7. Verfahren gemäß einem der Ansprüche 1 bis 6, bei dem der recycelte Strom restlichen Wasserstoff umfasst.

8. Verfahren gemäß einem der Ansprüche 1 bis 7, bei dem der recycelte Strom restliches Methan umfasst.

9. Verfahren gemäß einem der Ansprüche 1 bis 8, bei dem das Synthesegas am Ausgang des Vergasungsreaktors (10) eine zwischen 600 und 1000° C inbegriffene Temperatur aufweist.

10. Verfahren gemäß einem der Ansprüche 1 bis 9, bei dem der Wärmeaustausch-Schritt (202) vor dem Reinigungsschritt (204) ausgeführt ist.

11. Verfahren gemäß einem der Ansprüche 1 bis 10, das einen Entwässerungsschritt (203) umfasst, der nach dem Wärmeaustausch-Schritt (202) ausgeführt ist.

12. Verfahren gemäß einem der Ansprüche 1 bis 11, das bei einem zwischen 0,5 bis 70 bar inbegriffenen Druck ausgeführt ist.

13. Verfahren gemäß einem der Ansprüche 1 bis 12, bei dem die gashaltige Mischung, die am Ausgang des Methananreicherungsreaktors eine zwischen 250 und 700° C inbegriffene Temperatur aufweist.

14. Verfahren gemäß einem der Ansprüche 1 bis 13, bei dem der Strom, der nach dem Anpassungsschritt an die Spezifikationen erhalten ist, die Umgebungstemperatur aufweist.

15. Erzeugungsvorrichtung für Biomethan ausgehend von einer mit Kohlenstoff angereicherten Charge für die Umsetzung des Verfahrens gemäß den Ansprüchen 1 bis 14, **dadurch gekennzeichnet, dass** es wenigstens umfasst:

- einen Vergasungsreaktor (10), der eine Vergasung der Charge zum Erzeugen eines Synthesegases in dem Vergasungsreaktor durchführt,
- eine Entwässerungseinheit (15) des Synthesegases per Abkühlen und Kondensation von Wasserdampf,
- eine Kläreinheit (16), die eine Klärung des Synthesegases durchführt, das von dem Vergasungsreaktor (10) der Charge erzeugt und entwässert ist,
- einen Methananreicherungsreaktor (20), der eine Anreicherung des gereinigten und entwässerten Synthesegases mit Methan durchführt,
- ein Mittel zur Anpassung der gashaltigen Mischung an die Spezifikationen (30), die bei dem Anreicherungsschritt des Synthesegases mit Methan erhalten ist, um Biomethan zu erhalten, umfassend ein Recyclingmittel eines Stroms, der wenigstens aus im Vergasungsreaktor überschüssigem Kohlenmonoxid zusammengesetzt ist.

**Claims**

1. Method for the production of biomethane from hydrocarbon feedstock, **characterized in that** it comprises, successively, at least the following steps:

   - gasification (201) of the feedstock in order to produce a synthesis gas in a gasification reactor (10);
   - dehydration (203) of the synthesis gas by cooling and condensation of water vapor (203);
   - purification (204) of the synthesis gas produced during the hydrocarbon feedstock gasification step and dehydrated, in a purification unit (16);
   - methanation (206) of the purified and dehydrated synthesis gas, in a methanation reactor (20); and
   - adjustment to specifications (207) of the gas mixture obtained during the synthesis gas methanation step, in order to obtain biomethane, a flow comprising at least the excess carbon monoxide being recycled (208) towards the gasification reactor (10) during this step of adjustment to specifications.

2. Method according to claim 1,, wherein the hydrocarbon feedstock is biomass.

3. Method according to one of claims 1 to 2, which comprises, in addition, a heat exchange step (202) after the gasification step (201) making it possible to cool the synthesis gas to between 4 and 80°C.

4. Method according to claim 3,, wherein the synthesis gas at a temperature between 600°C and 1000°C is cooled after heat exchange to a temperature between 4°C and 80°C.

5. Method according to claim 3,, wherein the synthesis gas at a temperature between 600°C and 1000°C is cooled after heat exchange to a temperature between 25 and 35°C.

6. Method according to claim 4,, wherein the synthesis gas at a temperature between 600°C and 1000°C is cooled after heat exchange to the ambient temperature.

7. Method according to one of claims 1 to 6, wherein the recycled flow comprises residual hydrogen.

8. Method according to one of claims 1 to 7, wherein the recycled flow comprises residual methane.

9. Method according to one of claims 1 to 8 wherein, on exit from the gasification reactor (10), the temperature of the synthesis gas is between 600 and 1000°C.

10. Method according to one of claims 1 to 9, wherein the heat exchange step (202) is carried out before the purification step (204).

11. Method according to one of claims 1 to 10, which comprises a dehydration step (203), performed after the heat exchange step (202).

12. Method according to one of claims 1 to 11, which is performed at a pressure of 0.5 to 70 bar.

13. Method according to one of claims 1 to 12, wherein the temperature of the gas mixture obtained on output from the methanation reactor is between 250 and 700°C.

14. Method according to one of claims 1 to 13, wherein the flow obtained after the step of adjustment to specifications is at ambient temperature.

15. Device for the production of biomethane from hydrocarbon feedstock, for implementing the method according to claims 1 to 14, **characterized in that** it comprises at least:

   - a gasification reactor (10) performing a gasification of the feedstock to produce a synthesis gas in the gasification reactor;
   - a dehydration unit (15) for dehydrating the synthesis gas by cooling and condensation of water vapor;
   - a purification unit (16) performing a purification of the synthesis gas produced by the feedstock gasification reactor (10) and dehydrated;
   - a methanation reactor (20) performing a methanation of the purified and dehydrated synthesis gas;

- a means for adjustment to specifications (30) of the gas mixture obtained during the synthesis gas methanation step, in order to obtain biomethane, comprising a means for recycling a flow comprising at least the excess carbon monoxide in the gasification reactor.

*Figure 1*

*Figure 2*

*Figure 3*

*Figure 4*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0123302 A
- US 20100286292 A
- EP 1568674 A
- WO 2009007061 A
- US 20090259080 A
- WO 2011060539 A